# EUROPEAN PATENT SPECIFICATION

(11) **EP 3 490 955 B1**
(45) Date of publication and mention of the grant of the patent: **10.06.2020**
(21) Application number: 17748708.9
(22) Date of filing: 27.07.2017
(51) Int. Cl.: C04B 33/02, C01B 33/44, C04B 33/04, C04B 33/13, C04B 33/30, C04B 35/626, C04B 35/632, C04B 35/636

(54) **PROCESS FOR MAKING TILES**
VERFAHREN ZUR HERSTELLUNG VON FLIESEN
PROCESSUS DE FABRICATION DE TUILES

(30) Priority: 29.07.2016 IT 201600079966
(43) Date of publication of application: 05.06.2019
(73) Proprietor: Lamberti SPA, 21041 Albizzate (VA) (IT)
(72) Inventor: CRESPI, Stefano, 21052 Busto Arsizio (VA) (IT); RICCO', Davide, 41043 Corlo di Formigine (MO) (IT); PRAMPOLINI, Paolo, 41051 Castelnuovo Rangone (MO) (IT); FLORIDI, Giovanni, 28100 Novara (IT); LI BASSI, Giuseppe, 21026 Gavirate (VA) (IT)
(74) Representative: Giaroni, Paola
(86) International application number: PCT/EP2017/069035
(87) International publication number: WO 2018/019946

(56) References cited:
- WO-A1-2015/155110
- CN-A- 103 772 914
- JOHN W. JORDAN: "Alteration of the properties of bentonite by reaction with amines", MEETING OF THE CLAY MINERALS GROUP AT THE INTERNATIONAL GEOLOGICAL CONGRESS, LONDON, 27 August 1948 (1948-08-27), pages 598-605, XP002769437, London
- GATES WILL P.: "Crystalline swelling of organo-modified clays in ethanol-water solutions", APPLIED CLAY SCIENCE, ELSEVIER, AMSTERDAM, NL, vol. 27, no. 1-2, 1 October 2004 (2004-10-01), pages 1-12, XP004559401, ISSN: 0169-1317, DOI: 10.1016/J.CLAY.2003.12.001

## Description

### TECHNICAL FIELD

The present disclosure relates to a process for making ceramic tiles characterized by the addition to conventional ceramic raw materials of a composition comprising a modified swellable clay.

### PRIOR ART

The process of making ceramic tiles generally involves the following steps:
I) mixing of the ceramic raw materials;
II) dry-grinding the ceramic raw materials or wet-grinding the ceramic raw materials and spray-drying of the slips obtained from the wet-grinding;
III) forming green tiles by pressing the powdery grinded raw materials obtained from step II);
IV) drying the green tiles;
V) glazing the upper surface of the dried green tiles;
VI) firing the glazed green tiles.

The ceramic raw materials useful for the preparation of tiles are of two basic types:
- clayey materials (typically china clays and red vitrifiable clays);
- complementary inorganic materials (typically feldspars, feldspathoids, feldspathic sands, quartzes, pegmatites, etc.), having melting and/or inert features.

The purpose of grinding is to effect size reduction of the ceramic raw materials and to homogenise them until a final constant particle-size distribution has been achieved; generally speaking, after grinding, the residue on a 63 microns (230 mesh) sieve is around 0.5-10 % by weight (% wt), depending on the nature of the ceramic materials.

Wet grinding provides wet grinded ceramic raw materials, also called ceramic slips, containing about 30-40 % wt of water.

Dry grinding is a less used techniques, but is able to produce materials with a grain size distribution comparable with that obtained with a wet process. The subsequent step of forming require dry raw materials (moisture content <10 % wt), so the ceramic slip obtained from the wet-grinding must be dried, usually by spray drying. The purpose of spray drying is to achieve a partial evaporation of the water contained in the slip (reduction of water content to 4-7 % wt) together with the formation of spheroid particles.

The typical particle size distribution of the powders after wet- or dry-grinding is 70-80 % wt of particles in the range from 425 to 180 microns. These powder are suitable, for example, in the production of vitrified single-fired tiles.

The purpose of forming the tile body by pressing is to obtain the utmost possible densification of the powders on green tiles; generally speaking, the specific forming pressure for the bodies is around 200-450 Kg/cm².

Drying is the processing phase which eliminates the residual pressing moisture in the newly formed tiles; the tile bodies coming out of the presses are collected by roller lines and sent to the dryers, provided with inside channels dispensing hot air to the drying zone.

Glazing may be performed using the usual dry or wet application techniques.

Firing is performed in a kiln using pre-defined firing cycles; the firing cycles and temperatures generally fall respectively within the range of 20-60' and 1100-1250 °C, depending of the nature of the ceramic masses to be fired and on the size of the tiles themselves.

Forming and drying of the ceramic green tile bodies represents critical operations in the manufacture of the articles. Additives are commonly added in the preceding steps in order to reduce defects generated during pressing and drying. Typical additives are binders and plasticizers. Plasticizers are added for the specific purpose of increasing the capacity of the slips to change permanently in size and shape during the forming of the tiles. Known organic plasticizer are glycols, such as polyethylene glycols, polyvinyl alcohols, and polyacrylates.

Unfortunately the addition of large amount of organic additives increases the organic matter content in ceramic bodies and experience has shown that pressed tile bodies employing too much organic are quite subject to black coring problems.

Also inorganic plasticizers are known. Examples of inorganic plasticizers are specific clays, such as the ball clays or clays belonging to the group of illite-chlorite and/or illite-kaolinite clays, but their use is limited by their relative high cost and periodical shortages.

It is known that swelling clays, such as the bentonites, exhibit plasticity and binding properties and that their addition to the ceramic raw materials, in the manufacture of tiles, increases both the green and the dry strength. For these reasons bentonites are occasionally combined in small amounts as a powder with the ceramic raw material before grinding. However, there is wide variation in the chemistries of bentonites and, before their addition to the slips, they must be tested in laboratory and carefully controlled on the plant because their strong effect on the viscosity and the rheology characteristics of the ceramic mixtures can produce dramatic results on the grinding process.

Moreover bentonites shrink more during drying and thus potentially crack more, so they can be only used in a limited amount.

In order to overcome these problems, WO 2015/155110 suggests to add to the ceramic raw material mixtures an aqueous slurry comprising a swellable clay of the smectite family, a binder and a water-soluble salt of a monovalent cation. According to WO 2015/155110, these aqueous slurries act as a plasticizer and as a binder, do not cause the problems of black coring, have a predictable behavior and, since it has a little effect on the viscosity of ceramic raw material mixtures or of the ceramic slips, do not require any preliminary laboratory test and, finally, increase the strength of both the green and the dried tile bodies. Moreover the slurries, being easily pourable liquids, may be added not only during the mixing of the raw materials but also to the ceramic slip during the let down phase after the grinding step, without causing formation of gels or residues which would require a further long and difficult filtration step.

Unfortunately, slurries have a limited shelf-life, especially those which have a high content of solid matter, such as the slurries described in WO 2015/155110.

Moreover, in dry-processes, it is preferable to use powdery ingredients, instead of aqueous slurries.

In addition, many tile production plants only contemplate the addition of additives in powder form and not in form of liquid slurries, which would require a modification of the plant.

Now, we have found that a swelling clay, which has been reacted with a small quaternary ammonium salt, can be used in powder form without any of the above mentioned problems or limitations and is suitable for all kinds of ceramic tile production processes. As for the slurries of WO 2015/155110, this modified swellable clay acts as a plasticizer, has a predictable behavior and has a little effect on the viscosity of ceramic raw material mixtures or of the ceramic slips. Moreover, in a wet-process, this modified swellable clay may be added not only in step I or between step II and spray drying of step IIA as described in WO 2015/155110, but also after step IIA). This is very useful for the tile manufacturers when the ceramic raw materials are purchased already grinded and spray dried from specialized companies, occurrence which is very common in the field.

In addition, the modified swellable clay of the invention can be easily mixed with further ceramic additives in powder form to give improved and more complete performances.

Clays modified with quaternary ammonium salts are well known in the art. Usually, they are smectite clays that have been modified by a cation exchange reaction with a fatty quaternary ammonium surfactant. Generally, the quaternary ammonium surfactant is chosen to impart some organophilic character to the modified clays, that, for this reason, are called organophilic clays or organoclays. Many uses have been proposed for these organoclays, particularly as thickeners and/or suspending agents in oil based drilling fluids, in greases, in paints, in cements, in polymer composites and the like.

Clays modified with small quaternary ammonium salts have no organophilic character and are not useful for thickening organic system. As a consequence, they have been less frequently utilized. In an exemplary patent, US 2015/144029, a bentonite modified with a composition comprising a water-soluble thiosulfate, a water-soluble alcohol compound and a water-soluble amine compound, selected from the group consisting of triethanolamine, isopropanol amine, hydrazine hydrate, water-soluble alkylamines, has been used as an additive for cements.

As far as the Applicant knows, none has described the use of the modified swellable clays of the present disclosure in the production of ceramic tiles.

### DESCRIPTION OF THE INVENTION

It is a fundamental object of the present invention a process for making ceramic tiles comprising the following steps:
I) mixing the ceramic raw materials;
II) dry-grinding the ceramic raw materials or wet-grinding the ceramic raw materials and spray drying of the ceramic slip obtained from the wet-grinding;
III) forming green tiles by pressing the powdery grinded raw materials obtained from step II);
   said process being characterized by the addition to the ceramic raw materials, before step III), of a powder composition comprising the modified swellable clay which has been obtained by reaction of a swellable clay with from 3 to 25 % by weight, preferably from 6 to 15 % by weight, more preferably from 6 to 12 % by weight, based on the weight of the swellable clay, of at least one organic ammonium salt of formula I: 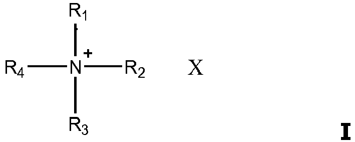 wherein X⁻ is an organic or inorganic anion, R₁ is a substituted or unsubstituted, linear or branched or cyclic C₁-C₈ alkyl group and R₂, R₃ and R₄ are, each independently, hydrogen or a substituted or unsubstituted, linear or branched or cyclic C₁-C₈ alkyl group, provided that the number of carbon atoms in the organic ammonium cation is from 2 to 12;
   said composition being added in an amount such that from 0.01 to 3.0 % by weight, preferably from 0.05 to 2.0 % by weight, of said modified swellable clay, based on the weight of the ceramic raw materials (dry matter), is added.

It is another object of the invention a powder composition comprising:
a) from 40 to 75 % by weight of said modified swellable clay;
b) from 25 to 60 % by weight of a binder selected in the group consisting of ligninsulfonates, naphthalene sulfonate-formaldehyde condensate salts, mono- and oligo-saccharides, water-soluble starches, water-soluble cellulose derivatives and mixtures thereof.

### DETAILED DESCRIPTION OF THE INVENTION

The process for modifying the swellable clay of the invention involves the ion exchange reaction between exchangeable inorganic cations within the swellable clay and the above mentioned organic ammonium cations, resulting in the formation of expanded crystalline layers.

The swellable clays which are useful as starting materials in accordance with the process of this invention are those exhibiting substantial cation-exchange properties, and particularly those exhibiting comparatively high cation-exchange properties and containing cations capable of more or less easy replacement.

Example of suitable swelling clays are the swelling clays of the smectite family, a well known family of three-layer clay minerals containing a central layer of alumina or magnesia octahedra sandwiched between two layers of silica tetrahedra and have an idealized formula based on that of pyrophillite which has been modified by the replacement of some of the Al⁺³, Si⁺⁴, or Mg⁺² by cations of lower valency to give an overall anionic lattice charge. The swelling clays of the smectite family include montmorillonite, which includes bentonite, beidellite, nontronite, saponite, stevensite and hectorite. The suitable swelling clays have, preferably, a cation exchange capacity of from 50 to 150 meq/100 g dry mineral; they can be dispersed in water relatively easily.

For use in the process according to the present invention, the swelling clay is preferably in the sodium or lithium form, which may occur naturally, but is more frequently obtained by cation exchange of naturally occurring alkaline earth clays, or in the hydrogen form which is obtainable by mineral acid treatment of alkali metal or alkaline earth metal clays. Such sodium, lithium or hydrogen-form clays generally have the property of increasing their basal spacing when hydrated to favor the phenomenon known as swelling.

For the realization of the present invention, bentonite is the preferred swelling clay, sodium bentonite is particularly preferred.

In a preferred embodiment of the invention, the number of carbon atoms in the organic ammonium cation is from 2 to 9, more preferably from 2 to 7.

Preferably, in formula I, R₁ is a substituted or unsubstituted, linear or branched or cyclic C₁-C₆ alkyl group and R₂, R₃ and R₄ are, independently each other, hydrogen or a substituted or unsubstituted, linear or branched or cyclic C₁-C₆ alkyl group.

More preferably R₁ is a substituted or unsubstituted, linear or branched C₁-C₄ alkyl group and R₂, R₃ and R₄ are, independently each other, hydrogen or a substituted or unsubstituted, linear or branched C₁-C₄ alkyl group.

In one embodiment, the organic ammonium salts which are used in this invention to modify the swellable clay comprise ammonium cations obtained by acid-addition of amines with substituted or unsubstituted alkyl groups, which contain no more than 12 carbon atoms.

The amines can be unsubstituted primary, secondary or tertiary amines. Specific examples of suitable amines include: ethyl amine, diethyl amine, triethyl amine, methyl diethyl amine, n-propyl amine, di-n-propyl amine, iso-propyl amine, butyl amine, hexyl amine, cyclohexyl amine, octyl amine, 2-ethylhexyl amine, dimethyl hexyl amine, diethyl heptyl amine, dibutyl amine, dimethyl octyl amine, methyl octyl amine, etc.

In another embodiment, the alkyl group of the amine is substituted and contains functional group (internal, terminal, and/or pendant to at least one carbon) selected from the group consisting of hydroxy, amino, oxy, amido, ketonic, aldehydic, carboxylate, halide function. Preferably the alkyl group contain a hydroxy or an amino function.

Representative examples of hydroxy alkyl groups include: 2-hydroxy ethyl; 3-hydroxy propyl; 4-hydroxy pentyl; 6-hydroxy hexyl; 2-hydroxy propyl; 2-hydroxy butyl; 4-hydroxy cyclohexyl; etc.

Specific examples of hydroxy alkyl amines are monoethanol amine, diethanol amine, triethanol amine, methyl diethanol amine, n-propanol amine, and mixtures thereof.

Representative examples of amino alkyl group include: 2-amino ethyl; 3-amino propyl; 4-amino pentyl; 6-amino hexyl; 2-amino pentyl; etc. Specific examples of amino alkyl amines are: ethylene diamine, diethylene triamine, propylene diamine, dipropylene triamine, tetramethylene diamine, hexamethylene diamine, dihexamethylene triamine and mixture thereof. Useful acids for the salification of the amines of the invention are inorganic or organic acids, such as hydrochloric acid, hydrobromic acid, nitrous acid, nitric acid, sulfuric acid, methane sulfuric acid, formic acid, acetic acid, and the like.

The organic ammonium salts which are suitable for the realization of this invention also include tetraalkyl ammonium cation obtained by alkylation of the above mentioned amines.

In the preferred tetraalkyl ammonium salts of formula I, R₁ is a substituted or unsubstituted, linear or branched or cyclic C₁-C₆ alkyl group and R₂, R₃ and R₄ are methyl. In a more preferred embodiment, R₁ is a substituted or unsubstituted, linear or branched C₁-C₄ alkyl group and R₂, R₃ and R₄ are methyl.

In the tetraalkyl ammonim salts of formula I, the organic or inorganic anion X⁻ is preferably selected from the group consisting of chloride and bromide, and mixtures thereof, and is more preferably chloride, although other anions such as acetate, methyl sulfate, nitrate, etc., may be present. Specific examples of suitable unsubstituted tetraalkyl ammonium salts are tetramethyl ammonium chloride, trimethyl ethyl ammonium chloride, trimethyl propyl ammonium chloride, tetraethyl ammonium chloride, tetrapropyl ammonium chloride and the like. A preferred substituted tetraalkyl ammonium salt is choline chloride.

The modified swellable clay of this invention can be prepared following any of the process described in literature for organically modifying a clay.

For example, the modified clay can be prepared by a wet process, admixing together the clay, a quaternary ammonium salt and water, preferably at a temperature within the range of from 30 to 100 °C for a period of time sufficient for the organic ammonium compound to react with the clay particles, followed by filtering, washing, drying, and grinding. When admixing the clay, the ammonium compound and water in such concentrations that a slurry is not formed, then the filtration and washing steps can be eliminated.

In an exemplary wet process useful for preparing the modified swellable clay, the clay can be dispersed in water at a concentration from about 1 to about 70 % by weight, the slurry, optionally centrifuged to remove non-clay impurities is then stirred and heated to a temperature in the range of from 60 to 77 °C; the organic ammonium compound is added in the desired amount, for example as a liquid in isopropanol or in water; and the agitation is continued to effect the reaction.

In another embodiment the modified swellable clay can be obtained by a dry or semi-dry process, as described in US 4,474,705, US 4,402,881 and EP 2 910 526. According to these processes, a dry swellable clay is transferred into a mixer for powder products and a quaternary ammonium salt in pure form (both liquid or solid) or as a concentrated solution is added. After an appropriate reaction time, the mixer is stopped and the modified clay is removed.

Preferably, the modified swellable clay is obtained by a dry or semi-dry process.

The powder composition of the invention can also comprise other ceramic additives, such as binders, dispersants, preservatives, biocides, antifoams, de-airing agents, deflocculants, levelling agents and mixture thereof.

In a preferred embodiment of the invention, the process for making ceramic tiles is characterized by the addition of a powder composition comprising:
a) from 40 to 75 % by weight, preferably from 45 to 65 % by weight, of said modified swellable clay;
b) from 25 to 60 % by weight, preferably from 35 to 55 % by weight, of a binder, selected in the group consisting of ligninsulfonates, naphthalene sulfonate-formaldehyde condensate salts, mono- and oligo-saccharides, water-soluble starches, water-soluble cellulose derivatives and mixtures thereof.

Binders are added for the specific purpose of cementing together the powdery raw materials and increasing the mechanical resistance of the dried green tiles.

Examples of mono- and oligo-saccharides, suitable as binders, are sugars, such as glucose and sucrose; sugar alcohols, such as sorbitol; dextrins and maltodextrins. These binders are commonly used in the field and well known to the expert in the art.

Particularly preferred binders for the realization of the invention are sodium or potassium ligninsulfonates.

Ligninsulfonates are a by-product of the production of wood pulp. As the organic lignin molecule combines with strongly polar sulfonic acid groups during sulfite pulping, ligninsulfonates are readily soluble in water in the form of their sodium, calcium or ammonia salts. Ligninsulfonates are available as yellowish powders having variable compositions and also variable molecular dimensions. A typical weight average molecular weight of the ligninsulfonates is about 30,000 dalton (Da) and its typical number average molecular weight is about 3,000 dalton.

Naphthalene sulfonate-formaldehyde condensate salts, also called NSF, have been known for some time and have been fully described also as dispersing agents in different sectors. In general these materials are made by condensing molten naphthalene with fuming sulfuric acid to form naphthalene sulfonic acid derivatives having varying position isomers. The sulfonic acid derivative is then condensed with water and formaldehyde at temperatures of about 90 °C and thereafter converted to a salt by the addition of alkali metal or ammonium hydroxides or carbonates. The weight-average molecular weight of the naphthalene sulfonate formaldehyde condensate salts, suitable for the realization of the present invention, is preferably around 10,000 Da.

Low viscosity carboxymethyl cellulose and hydroxyethyl cellulose can be mentioned among the water-soluble cellulose derivatives. The carboxymethyl cellulose suitable for the realization of the present invention has a Brookfield® LVT viscosity, at 2% wt in water, 60 rpm and 20 °C, is from 5 to 100 mPa*s, preferably from 5 to 50 mPa*s. The carboxymethyl cellulose preferred for the realization of the present invention has degree of substitution comprised between 0.5 and 1.5, more preferably between 0.6 and 1.2.

Preferred binders are ligninsulfonates, naphthalene sulfonate-formaldehyde condensate salts, sugars, sugar alcohols, carboxymethyl cellulose, and mixture thereof.

The powder compositions, suitable for the realization of the process of the invention, can also comprise from 0.4 to 5 % by weight, preferably from 0.7 to 3 % by weight, of a dispersant, which can be chosen among those commonly used in the field. Examples of dispersants are (meth)acrylic acid polymers, usually provided as sodium salt; phosphonates, phosphates and polyphosphates, such as sodium tripolyphosphate; sodium metasilicate; sodium di-silicate; and mixtures thereof. Particularly preferred dispersants are (meth)acrylic acid polymers with a weight average molecular weight below 20,000 Da, and preferably below 10,000 Da, for instance from 1,000 to 6,000 Da.

Suitable biocides and preservatives are, for example, p-chloro-m-cresol, o-phenyl phenol, 2-bromo-2-nitropropane-1,3-diol (Bronopol) or compounds from the class of the derivatized isothiazolin-3-ones such as benzoisothiazolinone (BIT), 5-chloro-2-methyl-4-isothiazolin-3-one (CIT or CMIT) and 2-methyl-4-isothiazolin-3-one (MIT). Other examples are sodium or zinc pyrithione, parabens, sodium benzoate, formaldehyde releasers etc.

Examples of antifoams and de-airing agents suitable for the realization of the present invention are aluminum stearate, ethylene/propylene oxide copolymers, polydimethyl siloxanes, colloidal silica, mineral oils and mixture thereof.

Other common ceramic additives can be also present in the powder composition of the invention. Example of such additives are perfumes, dyes and the like.

The powder compositions can be prepared by simply mixing the modified swellable clay and the other additives in powder form. Any suitable mixing device for powders can be employed.

The powder compositions described above can be used us such for making ceramic tiles according to the process of present invention.

In another embodiment of the invention , the powder composition is pre-dispersed in water soon before the addition to the ceramic raw materials or to the ceramic slips.

In a preferred embodiment, the powder composition is added in step I).

According to this embodiment, the combination of the ceramic raw materials and the composition comprising the modified swellable clay is typically accomplished by mixing carefully the ceramic raw materials with the composition of the invention to form a homogeneous mixture.

This mixture is then subjected to grinding, which can be performed using either a wet- or dry-process.

In another preferred embodiment, the powder composition comprising the modified clay is added to the ceramic slips between grinding (step and spray-drying.

In a particularly preferred embodiment, the powder composition of the invention is blended with the powders obtained from the spray drying of the slips or from the dry-grinding.

The process of the invention also comprises the step of forming green tiles, wherein the powdery intermediates are dry pressed in a forming die at operating pressures as high as 2,500 tons.

Usually, the process for making ceramic tiles further comprises the following steps: drying the green tiles, glazing the upper surface of the dried green tiles and finally firing the glazed tile bodies. These subsequent steps for the preparation of ceramic tiles can be accomplished by conventional techniques and procedures.

The tile making process of the invention has several advantages compared to prior art processes of making ceramic tiles using a unmodified swellable clay.

The process of the invention is suitable for the production of any kind of ceramic tile, such as wall tiles, floor tiles, stoneware, porcelain stoneware, rustic stoneware, earthenware tile, mosaic tiles, which can be both single and double fired.

The following non-limiting examples illustrate the preparation of exemplary modified swellable clays and process using powder compositions comprising said clays in accordance with the present invention.

### EXAMPLES

In the Examples the following raw material were used:
- Bentonite CGB-211, commercialized by American Colloid Company;
- Choline Chloride, 75 % wt water solution;
- Morpholine, 61 % wt water solution;
- N-methyl diethanol amine, 63% wt water solution (MDEA);
- Triethanol amine, technical grade (TEA);
- Sodium Ligninsulfonate;
- Sodium Naphtalene Sulfonate/Formaldehyde Condensate;
- Defomex CS 271, propoxylated butanol defoamer commercialized by Lamberti S.p.A.;
- Reotan HS, polyacrylic dispersant commercialized by Lamberti S.p.A.;
- HCI, 37 %.

### Examples 1-4

Four modified swellable clays according to the invention were prepared with the commercially available components reported in Table 1.

**Table 1**

| **Ingredient (g)** | **Example 1** | **Example 2** | **Example 3** | **Example 4** |
|---|---|---|---|---|
| Bentonite | 58.5 | 58.5 | 58.5 | 58.5 |
| Choline Chloride | 5.4 | - | - | - |
| Morpholine | - | 6.6 | - | - |
| MDEA | - | - | 6.4 | - |
| TEA | - | - | - | 5.4 |
| Tap water | 200 | 200 | 200 | 200 |
| HCl | - | to pH ∼4 | to pH ∼4 | to pH ∼4 |

The modified clays of Examples 1-4 were prepared according to the following wet procedure:
- dissolve the ammine in tap water;
- add the hydrochloric acid;
- add the bentonite;
- stir for 10 minutes;
- separate the modified clay from the solution;
- dry the modified clay at 105 °C in oven.

17 g of the modified swellable clays were added to 100 ml of tap water and carefully dispersed. The viscosities, at 3,8 s⁻¹, of the dispersions were determined using a Physica MCR 101 rheometer. Table 2 reports the results obtained in comparison with the viscosity of the unmodified swellable clay at the same concentration in tap water.

**Table 2**

| | **Clay*** | **Example 1** | **Example 2** | **Example 3** | **Example 4** |
|---|---|---|---|---|---|
| Viscosity (mPa.s) | 36430 | 88 | 111 | 486 | 735 |

| | | | | | |
|---|---|---|---|---|---|
| * Comparative | | | | | |

### Dissolution test

In order to evaluate the behavior the powder compositions of the invention in ceramic raw material mixtures, two compositions comprising a modified swellable clay were prepared with the ingredients reported in Table 3.

**Table 3**

| **Ingredient (g)** | **Example 5** | **Example 6** |
|---|---|---|
| Bentonite | 56 | 50 |
| Choline Chloride | 5.0 | 5 |
| Ligninsulfonate | 37.9 | 43.9 |
| Preservative | 0.9 | 0.9 |
| Defomex CS 271 | 0.2 | 0.2 |

The compositions of Examples 5 and 6 were prepared following this semi-dry procedure:
- transfer the clay in a powder mixer;
- spray on the organic ammonium salt solution;
- stir for 10 minutes to obtain the modified swellable clay;
- add the other ingredients;
- stir for 10 minutes.

The behavior of the compositions was evaluated by determining the viscosity by Ford viscosity cup (ASTM Standard Method D1200-10) on dispersions obtained by grinding 500 g of the ceramic raw materials of Table 4 with 240 g of tap water.

**Table 4**

| **Ingredients** | **Parts** |
|---|---|
| Refractory Clay | 20 |
| Plastic Clay | 10 |
| Feldspar | 30 |
| Sand | 39 |
| Reotan HS | 1 |

4 dispersions were prepared: one without any additive (blank), one with 0.3 % by weight of the composition of Example 5 (Example 7), one with 0.5 % by weight of a dispersion prepared adding 40 % wt of the composition of Example 5 to tap water (Example 7A) and one with 0.3 % by weight of the composition of Example 6 (Example 8). The dispersions were homogenized by means of high speed mechanical stirrer equipped with a eight blades impeller, working at 320 rpm for 10 minutes.

The following results were obtained:

| | **Blank*** | **Example 7** | **Example 7A** | **Example 8** |
|---|---|---|---|---|
| **Ford Viscosity (sec)** | 18 | 20 | 21 | 19 |

| | | | | |
|---|---|---|---|---|
| *Comparative | | | | |

The results show the excellent (low) viscosity of the dispersions of ceramic raw materials comprising the compositions of Examples 5 and 6, even if pre-dispersed in tap water.

The use of the compositions according to the invention allows to avoid high viscosities and the problems that they would create, such as difficulties in grinding and in moving the slips through the various steps of the process. In order to evaluate the presence of gel/lumps and residues, analogous tests were performed on ceramic slips obtained by wet-grinding the ceramic mixture described above without any additive.

The tests were performed on three slips: one without additives (Blank), a slip with 0.5 % by weight of composition of Example 5 (Example 9) and a slip with 0.3 % by weight of bentonite powder (Example 10). The mixtures were homogenized by means of high speed mechanical stirrer equipped with a eight blades impeller, working at 320 rpm for 10 minutes.

After homogenization, 250 g of each slip were screened on a tared 63 microns ASTM sieve (100 mesh) and the amount of undissolved material (residue) was determined by weight difference after drying in oven at 105 °C for 2 hours.

The following results were obtained:

| | **Blank*** | **Example 9B** | **Example 10*** |
|---|---|---|---|
| **Residue (% wt)** | 0.4 | 0.4 | 1.1 |

| | | | |
|---|---|---|---|
| *Comparative | | | |

The results demonstrate that the slip containing the powder composition of Example 5 has a lower content of residues.

The presence of high concentrations of residues creates problems in the subsequent steps of the process and forces the user to filtrate again the slip before the spray-drying.

### Strength test

The performances of the compositions of the invention were determined on tiles bodies prepared with the slip described in the previous paragraph.

The composition of Example 5 was added to the ceramic slip in an amount equivalent to 0.5 % by weight and carefully dispersed using a mechanical stirrer.

After homogenization, the slips were conditioned at 75-80 °C in oven for one night and grinded again to get particles with size below 0.75 mm.

At the end of the grinding process, the moisture content of the ceramic slips was brought to about 6 % by weight in oven at 105 °C.

Green tile bodies (5 cm x 10 cm, 0.5 cm thick) were prepared by means of a laboratory hydraulic press (Nannetti, Mod. Mignon SS/EA) applying a pressure of about 300 Kg/cm² (Tile 1).

Comparative green tiles were prepared with the same procedure and with the sole ceramic raw materials.

The modulus of rupture (MOR) of the green tile bodies was determined according to the International Standard Test Method ISO 10545-4, using a laboratory fleximeter (Nannetti, Mod. FM96).

The MOR of the dry tile bodies was determined on the remaining tile bodies after drying in oven for one night at 110°C.

The modulus of rupture is an index of the strength of the tile bodies. The results expressed as % increase (mean values) of the strength of the tile bodies prepared according to the invention (Tile 1) compared to the strength of the comparative tile bodies are reported in Table 5.

**Table 5**

| | **Tile 1** |
|---|---|
| % Green Strength | +56 |
| % Dry Strength | +92 |

The same test was performed using a dry-process, using the ceramic raw materials reported in Table 4.

0.5 % and 1.0 % by weight of the composition of Example 5 were added to the ceramic mixture obtained by dry-grinding and carefully dispersed using a laboratory powder mixer.

The final moisture content was about 6 % by weight.

Green tile bodies (5 cm x 10 cm, 0.5 cm thick) were prepared by means of a laboratory hydraulic press (Nannetti, Mod. Mignon SS/EA) applying a pressure of about 300 Kg/cm².

Comparative green tiles were prepared with the same procedure without the compositions of the invention.

Table 6 reports the % increase of the strength of the tile bodies prepared according to the invention (Tile 2 and Tile 3 respectively).

**Table 6**

| | **Tile 2** | **Tile 3** |
|---|---|---|
| % Green Strength | +7 | +8 |
| % Dry Strength | +21 | +41 |

## Claims

1. A process for making ceramic tiles comprising the following steps:
I) mixing the ceramic raw materials;
II) dry-grinding the ceramic raw materials or wet-grinding the ceramic raw materials and spray drying the ceramic slip obtained from the wet-grinding;
III) forming green tiles by pressing the powdery grinded ceramic raw materials obtained from step II);
said process being **characterized by** the addition to the ceramic raw materials, before step III), of a powder composition comprising the modified swellable clay which has been obtained by reaction of a swellable clay with from 3 to 25 % by weight, based on the weight of the swellable clay, of at least one organic ammonium salt of formula I: 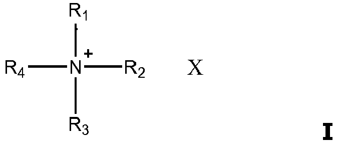 wherein X⁻ is an organic or inorganic anion, R₁ is a substituted or unsubstituted, linear or branched or cyclic C₁-C₈ alkyl group and R₂, R₃ and R₄ are, each independently, hydrogen or a substituted or unsubstituted, linear or branched or cyclic C₁-C₈ alkyl group, provided that the number of carbon atoms in the organic ammonium cation is from 2 to 12;
said composition being added in an amount such that from 0.01 to 3.0 % by weight of the modified swellable clay, based on the weight of the ceramic raw materials (dry matter), is added.

2. The process of claim 1, wherein said composition is added in an amount such that from 0.05 to 2.0 % by weight of the modified swellable clay, based on the weight of the ceramic raw materials (dry matter), is added.

3. The process of claim 1, wherein the number of carbon atoms in the organic ammonium cation is from 2 to 9.

4. The process of claim 1, wherein, in formula I, R₁ is a substituted or unsubstituted, linear or branched or cyclic C₁-C₆ alkyl chain and R₂, R₃ and R₄ are, each independently, hydrogen or a substituted or unsubstituted, linear or branched or cyclic C₁-C₆ alkyl chain.

5. The process of claim 4, wherein, in formula I, R₁ is a substituted or unsubstituted, linear or branched or cyclic C₁-C₆ alkyl chain and R₂, R₃ and R₄ are methyl.

6. The process of claim 1, wherein said swellable clay is a swelling clay of the smectite family.

7. The process of claim 6, wherein said swelling clay of the smectite family is a bentonite.

8. The process of claim 1, wherein the powder composition comprises:
a) from 40 to 75 % by weight of said modified swellable clay;
b) from 25 to 60 % by weight of a binder selected in the group consisting of ligninsulfonate, naphthalene sulfonate-formaldehyde condensate salts, mono- and oligo-saccharides, water-soluble starches, water-soluble cellulose derivatives and mixtures thereof.

9. A powder composition comprising:
a) from 40 to 75 % by weight of the modified swellable clay which has been obtained by reaction of a swellable clay with from 3 to 25 % by weight, based on the weight of the swellable clay, of at least one organic ammonium salt of formula I: 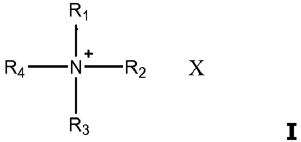 wherein X⁻ is an organic or inorganic anion, R₁ is a substituted or unsubstituted, linear or branched or cyclic C₁-C₈ alkyl group and R₂, R₃ and R₄ are, each independently, hydrogen or a substituted or unsubstituted, linear or branched or cyclic C₁-C₈ alkyl group, provided that the number of carbon atoms in the organic ammonium cation is from 2 to 12.
b) from 25 to 60 % by weight of a binder selected in the group consisting of ligninsulfonate, naphthalene sulfonate-formaldehyde condensate salts, mono- and oligo-saccharides, water-soluble starches, water-soluble cellulose derivatives and mixtures thereof.

10. The powder composition of claim 9, comprising:
a) from 45 to 65 % by weight of said modified swellable clay;
b) from 35 to 55 % by weight of said binder.

## Patentansprüche

1. Verfahren zur Herstellung von Keramikfliesen, umfassend die folgenden Schritte:
I) Mischen der keramischen Rohstoffe;
II) Trockenmahlen der keramischen Rohstoffe oder Nassmahlen der keramischen Rohstoffe und Sprühtrocknen des aus dem Nassmahlen erhaltenen keramischen Schlickers;
III) Bilden grüner Fliesen durch Pressen der pulverförmig gemahlenen keramischen Rohstoffe die in Schritt II) erhalten wurden;
wobei das Verfahren **gekennzeichnet ist durch** die Zugabe zu den keramischen Rohstoffen vor Schritt III) einer Pulverzusammensetzung, umfassend den modifizierten quellbaren Ton, der durch Reaktion eines quellbaren Tons mit 3 bis 25 Gew.-%, bezogen auf das Gewicht des quellbaren Tons, mindestens eines organischen Ammoniumsalzes der Formel I erhalten wurde: 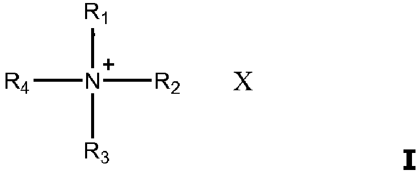 wobei X⁻ ein organisches oder anorganisches Anion ist, R₁ eine substituierte oder unsubstituierte, lineare oder verzweigte oder cyclische C₁-C₈-Alkylgruppe ist und R₂, R₃ und R₄ jeweils unabhängig voneinander Wasserstoff oder eine substituierte oder unsubstituierte, lineare oder verzweigte oder cyclische C₁-C₈-Alkylgruppe sind, mit der Maßgabe, dass die Anzahl der Kohlenstoffatome im organischen Ammoniumkation 2 bis 12 beträgt;
wobei die Zusammensetzung in einer solchen Menge zugegeben wird, dass zwischen 0,01 und 3,0 Gew.-% des modifizierten quellbaren Tons, bezogen auf das Gewicht der keramischen Rohstoffe (Trockenmasse), zugegeben wird.

2. Verfahren nach Anspruch 1, wobei die Zusammensetzung in einer solchen Menge zugegeben wird, dass 0,05 bis 2,0 Gew.-% des modifizierten quellbaren Tons, bezogen auf das Gewicht der keramischen Rohstoffe (Trockenmasse), zugegeben wird.

3. Verfahren nach Anspruch 1, wobei die Anzahl der Kohlenstoffatome im organischen Ammoniumkation zwischen 2 und 9 beträgt.

4. Verfahren nach Anspruch 1, wobei in Formel I R₁ eine substituierte oder unsubstituierte, lineare oder verzweigte oder cyclische C₁-C₆-Alkylkette ist und R₂, R₃ und R₄ jeweils unabhängig voneinander Wasserstoff oder eine substituierte oder unsubstituierte, lineare oder verzweigte oder cyclische C₁-C₆-Alkylkette sind.

5. Verfahren nach Anspruch 4, wobei in Formel I R₁ eine substituierte oder unsubstituierte, lineare oder verzweigte oder cyclische C₁-C₆-Alkylkette ist und R₂, R₃ und R₄ Methyl sind.

6. Verfahren nach Anspruch 1, wobei der quellbare Ton ein quellbarer Ton aus der Familie der Smektite ist.

7. Verfahren nach Anspruch 6, wobei der quellbare Ton aus der Familie der Smektite ein Bentonit ist.

8. Verfahren nach Anspruch 1, wobei die Pulverzusammensetzung umfasst:
a) zwischen 40 und 75 Gew.-% des modifizierten quellbaren Tons;
b) zwischen 25 und 60 Gew.-% eines Bindemittels, ausgewählt aus der Gruppe bestehend aus Ligninsulfonat, Naphthalinsulfonat-Formaldehyd-Kondensatsalzen, Mono- und Oligosacchariden, wasserlöslichen Stärken, wasserlöslichen Cellulosederivaten und Mischungen davon.

9. Pulverzusammensetzung, umfassend :
a) zwischen 40 und 75 Gew.-% des modifizierten quellbaren Tons, der durch Reaktion eines quellbaren Tons mit 3 bis 25 Gew.-%, bezogen auf das Gewicht des quellbaren Tons, mindestens eines organischen Ammoniumsalzes der Formel I erhalten wurde: 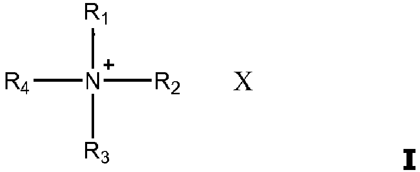 wobei X⁻ ein organisches oder anorganisches Anion ist, R₁ eine substituierte oder unsubstituierte, lineare oder verzweigte oder cyclische C₁-C₈-Alkylgruppe ist und R₂, R₃ und R₄ jeweils unabhängig voneinander Wasserstoff oder eine substituierte oder unsubstituierte, lineare oder verzweigte oder cyclische C₁-C₈-Alkylgruppe sind, mit der Maßgabe, dass die Anzahl der Kohlenstoffatome im organischen Ammoniumkation 2 bis 12 beträgt,
b) zwischen 25 und 60 Gew.-% eines Bindemittels, ausgewählt aus der Gruppe bestehend aus Ligninsulfonat, Naphthalinsulfonat-Formaldehyd-Kondensatsalzen, Mono- und Oligosacchariden, wasserlöslichen Stärken, wasserlöslichen Cellulosederivaten und Mischungen davon.

10. Pulverzusammensetzung nach Anspruch 9, umfassend :
a) zwischen 45 und 65 Gew.-% des modifizierten quellbaren Tons;
b) zwischen 35 und 55 Gew.-% des Bindemittels.

## Revendications

1. Procédé de fabrication de carreaux de céramique comprenant les étapes suivantes consistant à :
I) mélanger les matières premières céramiques ;
II) broyer à sec ou humide les matières premières céramiques et sécher par pulvérisation la barbotine céramique obtenue par le broyage humide ;
III) former des carreaux verts en pressant les matières premières céramiques broyées en poudre obtenues à l'étape II) ;
ledit procédé étant **caractérisé par** l'addition aux matières premières céramiques, avant l'étape III), d'une composition de poudre comprenant l'argile gonflable modifiée qui a été obtenue par réaction d'une argile gonflable avec de 3 à 25 % en poids, par rapport au poids de l'argile gonflable, d'au moins un sel d'ammonium organique de formule 1 : 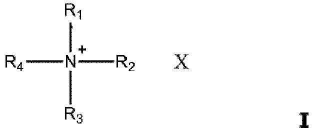 dans lequel X⁻ représente un anion organique ou inorganique, R₁ représente un groupe alkyle en C₁-C₈ substitué ou non substitué, linéaire ou ramifié ou cyclique et R₂, R₃ et R₄ représentent chacun indépendamment, un atome hydrogène ou un groupe alkyle en C₁-C₈ substitué ou non substitué, linéaire ou ramifié ou cyclique, à condition que le nombre d'atomes de carbone dans le cation ammonium organique soit de 2 à 12 ;
ladite composition étant ajoutée en une quantité telle que de 0,01 à 3,0 % en poids de l'argile gonflable modifiée, sur la base du poids des matières premières céramiques (matière sèche), sont ajoutés.

2. Procédé selon la revendication 1, dans lequel ladite composition est ajoutée en une quantité telle que de 0,05 à 2,0 % en poids de l'argile gonflable modifiée, sur la base du poids des matières premières céramiques (matière sèche), sont ajoutés.

3. Procédé selon la revendication 1, dans lequel le nombre d'atomes de carbone dans le cation ammonium organique est de 2 à 9.

4. Procédé selon la revendication 1, dans lequel, dans la formule I, R₁ représente une chaîne alkyle en C₁-C₆ substituée ou non substituée, linéaire ou ramifiée ou cyclique et R₂, R₃ et R₄ représentent, chacun indépendamment, un atome d'hydrogène ou une chaîne alkyle en C₁-C₆ substituée ou non substituée, linéaire ou ramifiée ou cyclique.

5. Procédé selon la revendication 4, dans lequel, dans la formule I, R₁ représente une chaîne alkyle en C₁-C₆ substituée ou non substituée, linéaire ou ramifiée ou cyclique et R₂, R₃ et R₄ représentent des groupes méthyle.

6. Procédé selon la revendication 1, dans lequel ladite argile gonflable est une argile gonflable de la famille des smectites.

7. Procédé selon la revendication 6, dans lequel ladite argile gonflable de la famille des smectites est une bentonite.

8. Procédé selon la revendication 1, dans lequel la composition de la poudre comprend :
a) de 40 à 75 % en poids de ladite argile gonflable modifiée ;
b) de 25 à 60 % en poids d'un liant choisi dans le groupe constitué de ligninsulfonate, sels de condensat de naphtalène sulfonate-formaldéhyde, mono- et oligo-saccharides, amidons solubles dans l'eau, dérivés de cellulose solubles dans l'eau et leurs mélanges.

9. Composition de poudre comprenant :
a) 40 à 75 % en poids de l'argile gonflable modifiée qui a été obtenue par réaction d'une argile gonflable avec 3 à 25 % en poids, sur la base du poids de l'argile gonflable, d'au moins un sel d'ammonium organique de formule I : 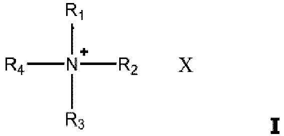 dans laquelle X⁻ représente un anion organique ou inorganique, R₁ représente un groupe alkyle en C₁-C₈ substitué ou non substitué, linéaire ou ramifié ou cyclique et R₂, R₃ et R₄ représentent, chacun indépendamment, un atome d'hydrogène ou un groupe alkyle en C₁-C₈ substitué ou non substitué, linéaire ou ramifié ou cyclique, à condition que le nombre d'atomes de carbone dans le cation ammonium organique soit de 2 à 12.
b) de 25 à 60 % en poids d'un liant choisi dans le groupe constitué de ligninesulfonates, sels de condensat de naphtalène sulfonate-formaldéhyde, mono- et oligo-saccharides, amidons solubles dans l'eau, dérivés de cellulose solubles dans l'eau et leurs mélanges.

10. Composition de poudre selon la revendication 9, comprenant :
a) de 45 à 65 % en poids de ladite argile gonflable modifiée ;
b) de 35 à 55 % en poids dudit liant.
